# EUROPÄISCHE PATENTSCHRIFT

(11) **EP 1 081 417 B1**
(45) Veröffentlichungstag und Bekanntmachung des Hinweises auf die Patenterteilung: **07.01.2004**
(21) Anmeldenummer: 00115046.5
(22) Anmeldetag: 26.07.2000
(51) Int. Cl.: F16H 61/30, F16D 48/06

(54) **Verfahren bzw. Vorrichtung zur Steuerung des Ausrückens eines in einem Kraftfahrzeuggetriebe vorgesehenen Kupplungsgliedes**
Apparatus and method for controlling the release of a clutch in a motor vehicle transmission
Méthode et dispositif pour commander le débrayage d'un embrayage dans une transmission de véhicule automobile

(30) Priorität: 28.08.1999 DE 19941011
(43) Veröffentlichungstag der Anmeldung: 07.03.2001
(73) Patentinhaber: Volkswagen Aktiengesellschaft, 38436 Wolfsburg (DE)
(72) Erfinder: Cappelmann, Bernd, 38167 Wendeburg (DE); Fähland, Jörg, Dipl.-Ing., 38524 Sassenburg (DE); Damm, Ansgar, Dr., 38518 Gifhorn (DE)

(56) Entgegenhaltungen:
- EP-A- 0 789 171
- DE-A- 3 513 279
- DE-A- 19 637 001
- PATENT ABSTRACTS OF JAPAN vol. 012, no. 201 (M-707), 10. Juni 1988 (1988-06-10) & JP 63 006258 A (ISUZU MOTORS LTD), 12. Januar 1988 (1988-01-12)
- PATENT ABSTRACTS OF JAPAN vol. 012, no. 145 (M-693), 6. Mai 1988 (1988-05-06) & JP 62 266254 A (TOYOTA MOTOR CORP), 19. November 1987 (1987-11-19)

## Beschreibung

Die Erfindung betrifft ein Verfahren zur Steuerung des Ausrückens eines in einem Kraftfahrzeuggetriebe vorgesehenen Kupplungsgliedes, insbesondere einer Schiebemuffe bei der automatischen Schaltung/bei dem automatischen Gangwechsel eines automatischen Schaltgetriebes, wobei das Ausrücken des Kupplungsgliedes zum Lösen einer Gangstufe im Getriebe mit Hilfe eines Steuergerätes gesteuert wird. Weiterhin betrifft die Erfindung eine Vorrichtung zur Steuerung des Ausrückens eines in einem Kraftfahrzeuggetriebe vorgesehenen Kupplungsgliedes, insbesondere arbeitend nach dem oben genannten Verfahren, wobei das Kupplungsglied als Schiebemuffe ausgebildet ist und die Schiebemuffe mit dem Losrad eines ein Losrad und ein Festrad aufweisenden Zahnradpaares einer Gangstufe des Getriebes in Eingriff bzw. außer Eingriff bringbar ist, wobei zumindest im teilweise eingerückten Zustand der Schiebemuffe eine wirksame Verbindung zwischen der Antriebswelle und der Abtriebswelle des Getriebes realisiert ist und das Ausrücken der Schiebemuffe zum Lösen der Gangstufe im Getriebe, insbesondere zur Realisierung eines Schaltvorganges bzw. Gangwechsels, mit Hilfe eines Steuergerätes steuerbar ist.

Im Stand der Technik, von dem die Erfindung ausgeht (DE-A-35 13 279), ist ein Verfahren bzw. eine Vorrichtung zur Steuerung eines automatisch schaltbaren Kraftfahrzeuggetriebes bekannt, bei der ein innerhalb des Getriebes vorgesehenes Kupplungsglied, nämlich eine Schiebemuffe aus- und eingerückt werden kann, um eine entsprechende Gangstufe zu lösen bzw. eine entsprechende Verbindung zwischen Antriebswelle und Abtriebswelle zu realisieren. Hierbei ist das als Schiebemuffe ausgebildete Kupplungsglied mit dem Losrad eines ein Losrad und ein Festrad aufweisenden Zahnradpaares einer Gangstufe des Getriebes in Eingriff bzw. außer Eingriff bringbar. Im eingerückten Zustand der Schiebemuffe, also dann wenn die Schiebemuffe mit dem Losrad in Eingriff gebracht worden ist, ist eine wirksame Verbindung zwischen der Antriebswelle und der Abtriebswelle des Getriebes realisiert. Um die eingelegte Gangstufe im Getriebe zu lösen bzw. bei einem Schaltvorgang oder bei einem Gangwechsel wird die Schiebemuffe ausgerückt. Zur Realisierung der Ausrückkraft ist ein "Federsystem" vorgesehen, das über die Schaltwelle des Gangstellers entsprechend wirksam mit der Schiebemuffe verbunden ist. Das "Federsystem" weist entsprechende Rückstellfedern auf, die ein Ausrücken der Schiebemuffe bewirken. Die Schiebemuffe ist mit dem Losrad über eine selbsthemmende Kupplungsverzahnung verbunden, wobei die Kupplungsverzahnung (Eingriffs- bzw. Mitnahmeverzahnung) so ausgebildet ist, daß zumindest die bei Zugbetrieb aneinanderliegenden Zugflanken der Verzahnungen einen derartigen Hinterschnittwinkel aufweisen, daß während des Anliegens eines oberhalb eines Mindestwertes liegenden Drehmomentes des Antriebsmotors die Verzahnungen entsprechende, die Schiebemuffe mit dem Losrad in Eingriff haltende, Haltekräfte erzeugt werden. Es sind daher Mittel, nämlich Rückstellfedern vorgesehen, die zur Aufbringung einer auf die Schiebemuffen einwirkenden konstanten Ausrückkraft dienen.

Bei der DE-A-35 13 279 soll nun bevor die entsprechende Gangstufe herausgenommen bzw. gelöst wird der aktive Gangsteller abgeschaltet werden, so daß dann das "Federsystem" entsprechend an der Schiebemuffe wirksam wird. Durch das Verringern des an der noch nicht gelösten Gangstufe anliegenden Drehmomentes fällt der Gang in dem Augenblick heraus, in dem das übertragende Drehmoment für eine hinreichend lange Zeit einen bestimmten Mindestwert erreicht bzw. unterschreitet, wenn nämlich dadurch die Selbsthemmung in der Kupplungsverzahnung zwischen Schiebemuffe und Losrad aufgehoben wird. Anders ausgedrückt, übersteigt die durch das "Federsystem" realisierte Ausrückkraft die von der Selbsthemmung in der Kupplungsverzahnung erzeugte Kraft, wenn das Drehmoment nämlich einen bestimmten Mindestwert annimmt, so wird die Schiebemuffe ausgerückt. Das Herausnehmen des Gangs bzw. das Lösen der Gangstufe erfolgt daher in dem Augenblick in dem kein Drehmoment oder nur ein sehr geringes, nämlich das Mindest-Drehmoment übertragen wird.

Die Praxis hat gezeigt, daß bei der Vorrichtung gemäß der DE-A- 35 13 279, von der die Erfindung ausgeht, die Steuerung des Ausrückens des als Schiebemuffe ausgebildeten Kupplungsgliedes nicht optimal ist. In allen Situationen, d. h. bei allen unterschiedlichen Gangstufen und den entsprechenden unterschiedlichen Gangwechseln liegt immer die gleiche Kraft zum Ausrücken des als Schiebemuffe ausgebildeten Kupplungsgliedes an der Schiebemuffe an. Diese Kraft reicht aber bei verschiedenen Fahrsituationen nicht immer aus, um ein reibungsloses Ausrücken der Schiebemuffe zu gewährleisten. So kann beispielsweise in Abhängigkeit der Fahrsituation das zu übertragende Drehmoment kurzfristig schnell abfallen, so daß in der zur Verfügung stehenden - relativ - kurzen Zeitspanne das "Federsystem" nicht in der Lage ist, die Schiebemuffe aus der mit dem Losrad existierenden Mitnehmerverzahnung herauszuziehen, was zum Verklemmen des Getriebes führt. Zwar könnte die Federkraft erhöht werden, was zwar in der oben beschriebenen Situation zunächst helfen würde, dies führt jedoch in anderen Fahrsituationen zu unerwünschten oder unkomfortablen Reaktionen, so daß dann die Schiebemuffe "ruckartig" ausrücken würde und auch entsprechende "Anschläge" große Kräfte aufnehmen müßten, was widerum zu unangenehmen Geräuschen innerhalb des Getriebes führen kann. Beispielsweise kann eine Erhöhung der Federkraft des "Federsystems" zu einem unbeabsichtigtem Herausnehmen des Ganges vor dem eigentlichen Gangwechsel bzw. vor dem beabsichtigtem Herausnehmen des Gangs führen, wenn nur ein geringes Drehmoment übertragen wurde, also das Fahrzeug nur mit geringer Last fährt und die Gangstufe aufgrund der existierenden - zu starken - Federkraft dann vorzeitig gelöst werden würde.

Der Erfindung liegt daher die Aufgabe zugrunde, das eingangs genannte Verfahren bzw. die eingangs genannte Vorrichtung derartig auszugestalten und weiterzubilden, daß die Steuerung des Ausrückens des Kupplungsgliedes verbessert ist, insbesondere ein Verklemmen des Getriebes oder das vorzeitige Lösen einer Gangstufe verhindert ist.

Für das Verfahren ist die Aufgabe dadurch gelöst, daß die Größe der Ausrückkraft variabel einstellbar ist und die Größe der Ausrückkraft in Abhängigkeit des an der zu lösenden Gangstufe übertragenden Drehmomentes und/oder der Änderungsgeschwindigkeit dieses Drehmomentes bestimmt wird.

Für die Vorrichtung ist die zuvor genannte Aufgabe dadurch gelöst, daß die Größe der an der Schiebemuffe wirksam angreifenden Ausrückkraft variabel einstellbar ist und die Größe der Ausrückkraft in Abhängigkeit des an der zu lösenden Gangstufe übertragenen Drehmomentes und/oder der Änderungsgeschwindigkeit dieses Drehmomentes bestimmt ist.

Dadurch, daß nun die Ausrückkraft zum Ausrücken des Kupplungsgliedes gesteuert wird und zwar auf die Art und Weise, daß zunächst die Größe der Ausrückkraft variabel eintstellbar ist, kann zunächst auch in vorteilhafter Weise für jede Gangstufe eine spezifische Ausrückkraft eingestellt werden. Zusätzlich wird die Größe der Ausrückkraft aber in Abhängigkeit des an der zu lösenden Gangstufe übertragenen Drehmomentes und/oder der Änderungsgeschwindigkeit dieses Drehmomentes bestimmt bzw. entsprechend eingestellt. Hierdurch können die eingangs beschriebenen Nachteile vermieden werden, da aufgrund der Steuerung der Größe der an dem Kupplungsglied angreifenden Ausrückkraft ein Verklemmen des Getriebes und/oder auch das vorzeitige Lösen einer Gangstufe verhindert werden kann. Einerseits kann die Ausrückkraft nun so eingestellt werden, daß auch bei einem entsprechend schnellen Abfall des zu übertragenden Drehmomentes, das Kupplungsglied schnell ausgerückt werden kann, um ein Verklemmen des Getriebes zu vermeiden. Andererseits wird durch die Einstellung der Ausrückkraft auch das vorzeitige Herausnehmen bzw. Lösen der Gangstufe verhindert. Insbesondere ist es aber möglich auch unter Berücksichtigung der Änderungsgeschwindigkeit des Drehmomentes, also wenn der Fahrer beispielsweise während eines Schaltvorganges den Fuß vom Gaspedal nimmt und dadurch das Drehmoment stärker abfällt, nun die Ausrückkraft noch entsprechend einzustellen, insbesondere zu erhöhen, damit das Kupplungsglied in der zur Verfügung stehenden relativ kurzen Zeitspanne auch vollständig ausgerückt werden kann. Im Ergebnis werden durch die erfindungsgemäße Ausgestaltung des Verfahrens bzw. der Vorrichtung die eingangs beschriebenen Nachteile vermieden.

Es gibt nun eine Vielzahl von Möglichkeiten, daß erfindungsgemäße Verfahren bzw. die erfindungsgemäße Vorrichtung in vorteilhafterweise auszugestalten und weiterzubilden. Hierzu darf auf die dem Patentanspruch 1 bzw. dem Patentanspruch 9 nachgeordneten Patentansprüche verwiesen werden. Im einzelnen soll nun ein Beispiel für das erfindungsgemäße Verfahren, bzw. die erfindungsgemäße Vorrichtung in der folgenden Beschreibung und Zeichnung näher erläutert werden. In der Zeichnung zeigt
- Fig. 1: in vereinfachter schematischer Darstellung eine Schaltungsanordnung bzw. Vorrichtung zur Realisierung des Verfahrens und
- Fig. 2a, b, c: verschiedene graphische Darstellungen zur Verdeutlichung der Wirkungsweise der Vorrichtung bzw. des Verfahrens.

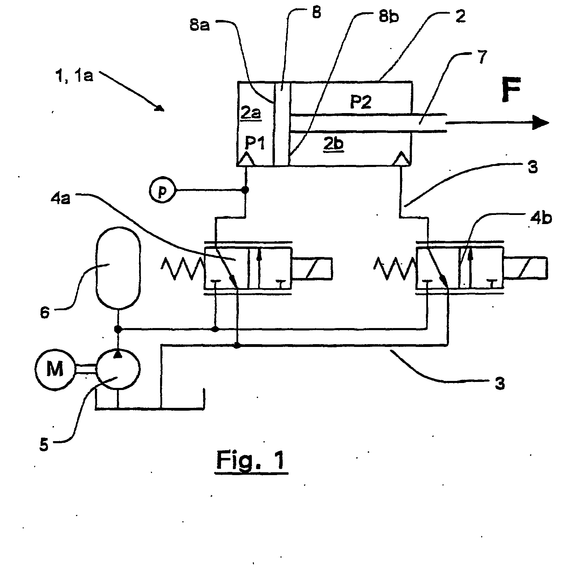

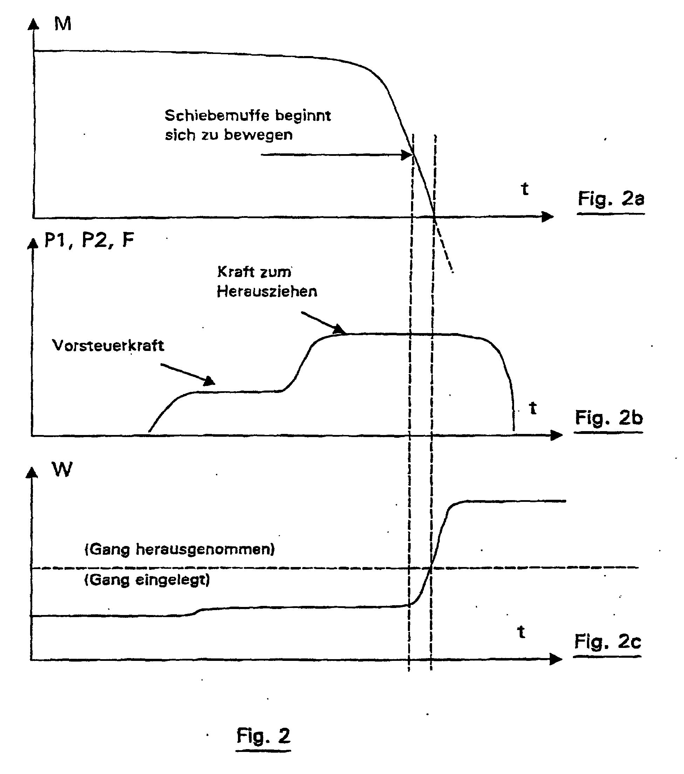

Die Fig. 1 und 2 zeigen ein Verfahren bzw. eine Vorrichtung zur Steuerung des Ausrückens eines in einem Kraftfahrzeuggetriebe vorgesehenen Kupplungsgliedes. Das Kraftfahrzeuggetriebe ist hier nicht dargestellt, wobei das Kraftfahrzeuggetriebe hier als automatisches Schaltgetriebe ausgeführt ist und zur Steuerung dieses automatischen Schaltgetriebes die üblichen Bestandteile, wie ein Steuergerät, Sensoren, Drehzahlmesser, ein im Steuergerät abgespeicherter Schaltplan, wie im Stand der Technik bekannt, vorgesehen sind. Es wird nun das Ausrücken des Kupplungsgliedes, nämlich einer Schiebemuffe bei der automatischen Schaltung oder dem automatischen Gangwechsel des automatischen Schaltgetriebes zum Lösen einer eingelegten Gangstufe im Getriebe gesteuert. Auch das Kupplungsglied, nämlich die Schiebemuffe ist hier nicht dargestellt.

Das als Schiebemuffe ausgebildete Kupplungsglied ist nun mit dem Losrad eines ein Losrad und ein Festrad aufweisenden Zahnradpaares einer Gangstufe eines Getriebes in Eingriff bzw. außer Eingriff bringbar, so wie dies in der DE-A-35 13 279 erläutert ist. Im teilweise eingerücktem Zustand der Schiebemuffe ist eine wirksame Verbindung zwischen der Antriebswelle und der Abtriebswelle des Getriebes realisiert, wobei das Ausrücken der Schiebemuffe zum Lösen der eingelegten Gangstufe im Getriebe bei einem Schaltvorgang oder einem Gangwechsel mit Hilfe eines nicht dargestellten Steuergerätes steuerbar ist.

Die eingangs erläuterten Nachteile werden nun bei dem Verfahren dadurch vermieden, daß die Größe der Ausrückkraft F variabel einstellbar ist und die Größe der Ausrückkraft F in Abhängigkeit des an der zu lösenden Gangschaltung übertragenden Drehmomentes M und/oder der Änderungsgeschwindigkeit dieses Drehmomentes M bestimmt wird. Durch die erfindungsgemäße Vorrichtung werden die eingangs beschriebenen Nachteile dadurch vermieden, daß die Größe der an der Schiebemuffe wirksam angreifenden Ausrückkraft F variabel einstellbar ist und die Größe der Ausrückkraft F in Abhängigkeit des an der zu lösenden Gangstufe übertragenen Drehmomentes M und/oder der Änderungsgeschwindigkeit dieses Drehmomentes M bestimmt ist.

Dadurch das nun die Größe der an der Schiebemuffe wirksam angreifenden Ausrückkraft F variabel einstellbar ist, können nun für die unterschiedlichen Gangstufen innerhalb eines automatisichen Schaltgetriebes Ausrückkräfte F eingestellt werden, wobei diese Ausrückkräfte F nicht nur in Abhängigkeit des an der zu lösenden Gangstufe übertragenen Drehmomentes M bestimmt bzw. eingestellt sind, sondern zusätzlich auch unter Berücksichtigung der Änderungsgeschwindigkeit dieses Drehmomentes eingestellt, bzw. bestimmt werden können.

Bevor im folgenden auf die in der Fig. 1 teilweise dargestellte erfindungsgemäße Vorrichtung 1 eingegangen wird, soll zunächst das Verfahren ausführlicher erläutert werden:

Das an der entsprechenden Gangstufe anliegende Drehmoment M, kann beispielsweise durch die Fahrpedalstellung des Gaspedals ermittelt werden. Die Änderungsgeschwindigkeit des an einer Gangstufe anliegenden Drehmomentes M kann auch durch die entsprechende Änderung der Fahrpedalstellung des Gaspedales, nämlich durch den Fahrpedalgradient ermittelt werden. Es ist aber auch denkbar, daß das an einer Gangstufe anliegende Drehmoment M auf andere Art und Weise ermittelt wird, beispielsweise durch die Drehzahlmessung an der Antriebsmotorwelle oder durch entsprechende Drehmomenten-Messungen an der Getriebeeingangs-bzw. -ausgangswelle und weiteren Kenndaten. Dies liegt in Wissen des Durchschnittsfachmanns und kann unterschiedlich realisiert werden. Das erfindungsgemäße Verfahren wird - wie aus Fig. 1 ersichtlich, hier mit hydraulischen Mitteln realisiert. Es ist aber auch denkbar, daß das Verfahren mit pneumatischen Mitteln oder auch mit mechanischen Mitteln realisiert wird. Beispielsweise sind "Federsysteme" denkbar, bei denen die Federkraft entsprechend variabel einstellbar ist.

Jeder Gangstufe des Kraftfahrzeuggetriebes ist nun ein spezifisches Mindest-Drehmoment und eine entsprechende Mindest-Ausrückkraft zugeordnet. Bei Erreichen und/oder Unterschreiten dieses Mindest-Drehmomentes wird das Kupplungsglied, hier die Schiebemuffe aufgerückt, um ein Lösen der Gangstufe zu realisieren. Bei einer während eines Schaltvorganges auftretenden Änderung des Drehmomentes M kann die Größe der am Kupplungsglied anliegenden Ausrückkraft f in Abhängigkeit der Änderungsgeschwindikeit dieses Drehmomentes M verändert werden, so daß insbesondere bei einem kurzfristigen Abfall des Drehmomentes M die am Kupplungsglied anliegende Ausrückkraft F erhöht werden kann.

Im folgenden soll dies anhand der Fig. 1 erläutert werden.

Die Fig. 1 zeigt eine erfindungsgemäße Vorrichtung 1, die hier nur teilweise dargestellt ist und beispielsweise im Bereich eines Gangstellers oder auch im Bereich der Schaltleiste innerhalb eines Getriebes angeordnet werden kann. Das Steuergerät zur Steuerung des automatischen Getriebes, sowie die entsprechenden Sensoren, wie Drehzahlmesser, Schaltstrategien oder dergleichen sind hier weder dargestellt noch soll hier näher darauf eingegangen werden, da dies in der entsprechenden Ausgestalltung des Durchschnittsfachmannes liegt.

Die Vorrichtung 1 weist hier eine Kolben-Zylinder- Einheit 2 auf, wobei die Kolben-Zylinder-Einheit 2 hier hydraulisch betätigbar ist. Es ist auch denkbar, daß die Kolben-Zylinder-Einheit 2 pneumatisch betätigt wird, was hier aber nicht dargestellt ist.

Wie Fig. 1 zeigt ist hier ein hydraulisches Steuersystem 1a vorgesehen, und zumindest teilweise dargestellt, das Hydraulikleitungen 3, zwei Hydraulikventile 4a, b, eine Hydraulikpumpe 5 und einen Hydraulikspeicher 6 aufweist.

Die Betätigungsstange 7 des Kolbens 8 der Kolben-Zylinder-Einheit 2 ist nun direkt oder indirekt mit der im Getriebe angeordneten Schiebemuffe wirksam verbunden.

Wie bereits eingangs erläutert, ist das Kupplungsglied hier als Schiebemuffe ausgebildet und die Schiebemuffe ist mit dem Losrad eines ein Losrad und ein Festrad aufweisenden Zahnradpaares einer Gangstufe des Getriebes in Eingriff bringbar bzw. außer Eingriff bringbar. Hierdurch ist zumindest in teilweise eingerücktem Zustand der Schiebemuffe eine wirksame Verbindung zwischen der Antriebswelle und der Abtriebswelle des Getriebes realisiert. Bei der bevorzugten Ausführungsform der Erfindung weist die Schiebemuffe und das Losrad entsprechende Eingriffs- bzw. Mitnahmeverzahnungen auf, wobei die bei Zugbetrieb aneinanderliegenden Zahnflanken der Verzahnung einen derartigen Hinterschnittwinkel aufweisen, daß, während des Anliegens eines oberhalb eines Mindestwertes liegenden Drehmomentes M des Antriebsmotors ,durch diese Verzahnungen die Schiebemuffe und das Losrad in Eingriff haltende Haltekräfte erzeugbar sind.

Durch die erfindungsgemäße Vorrichtung 1 ist nun für jede unterschiedliche Gangstufe auch eine unterschiedliche Ausrückkraft F bestimmbar, was im folgendem noch deutlich wird. So kann bei Unterschreitung eines der jeweiligen Gangstufe zugeordneten Mindest-Drehmomentes, die Scheibenmuffe und das Losrads außer Eingriff gebracht werden, da die entsprechende Ausrückkraft F an der Schiebemuffe anliegt. Die Betätigungsstange 7 des Kolbens 8 der Kolben-Zylinder-Einheit 2 ist mit der nicht dargestellten Schiebemuffe wirksam verbunden, was beispielsweise über die Schaltwelle des Gangstellers oder auch über die Schaltleiste des Getriebes entsprechend realisiert werden kann, wobei entsprechende zusätzliche Elemente "zwischengeschaltet"werden können.

Die Vorrichtung 1 weist nun ein nicht dargestelltes Steuergerät, vorzugsweise ein Getriebesteuergerät auf, daß schaltungstechnisch mit dem Hydraulikventilen 4a, b, sowie mit der Hydraulikpumpe 5 verbunden ist. Weiterhin kann die Vorrichtung 1 bzw. das gesamte System zur Ermittlung der Fahrpedalstellung des Gaspedals, das hier ebenfalls nicht dargestellt ist, einen ersten Sensor aufweisen, wobei zusätzlich zur Ermittlung der Änderungsgeschwindigkeit der Fahrpedalstellung des Gaspedals ein zweiter Sensor vorgesehen sein kann, um nämlich das an der Gangstufe übertragende Drehmoment M und/oder die Änderungsgeschwindigkeit dieses Drehmomentes M ermitteln zu können. Wie bereits erwähnt ist dies aber auch auf andere Art und Weise möglich, beispielsweise durch Messung des an der Antriebsmotorwelle anliegenden Drehmomentes und entsprechende Umrechnung über bekannte Größen mit Hilfe des Steuergerätes, so daß das an der jeweiligen Gangstufe in einem bestimmtem Augenblick anliegende Drehmoment M entsprechend berechenbar ist. Beispielsweise kann der erste und/oder der zweite Sensor als induktiver Geber oder als Drehwinkelmesser ausgebildet sein.

Es ist auch denkbar, daß die Wirkungsweise der in Fig. 1 dargestellten Vorrichtung 1 nicht über ein hydraulisches System, sondern über ein mechanisches Federsystem mit lastabhängiger, einstellbarer Federkraft realisiert wird, so daß hierüber die entsprechende Ausrückkraft F steuerbar ist, erläutert werden soll hier aber das in Fig. 1 dargestellte hydraulische System.

Die Kolben-Zylinder-Einheit 2 weist entsprechende Druckräume 2a und 2b auf. Soll nun das Kupplungsglied ausgerückt werden, so wird der Kolben 8 und mit ihm die Betätigungsstange 7 nach rechts verschoben. Hierzu muß im Druckraum 2a ein entsprechender Druck P1 herrschen und zum Druckraum 2b ein Druck P2. Über die Druckdifferenz P1 und P2 und die hier entsprechend jeweils dimensionierten Kolbenflächen 8a und b läßt sich die über die Betätigungsstange 7 ausgeübte und am Kupplungsglied wirksam anliegende Ausrückkraft F, hier dargestellt durch den Pfeil F, zunächst variabel für jede Gangstufe einstellen.

Das nicht dargestellte Steuergerät kann nun über die Hydraulikpumpe 5 und die Hydraulikventile 4a und 4b die entsprechenden Drücke P1 bzw. P2 in den Räumen 2a bzw. 2b einstellen, so daß für jede unterschiedliche Gangstufe jeweils eine bestimmte Ausrückkraft F anliegt. Das Steuergerät steuert diese Kraft F, nämlich die Größe der Ausrückkraft F in Abhängigkeit des an der zu lösenden Gangstufe übertragenen Drehmomentes M, das dem Steuergerät bekannt ist. Wird nun ein für die jeweilige Gangstufe bestimmtes Mindest-Drehmoment erreicht bzw. unterschritten, so wird mit Hilfe der anliegenden Ausrückkraft F die Schiebemuffe ausgerückt, da in diesem Fall die Selbsthemmung der zwischen der Schiebemuffe und dem Losrad bestehenden Verzahnung entsprechend überwunden werden kann. Zusätzlich kann das hier dargestellte System, nämlich die Vorrichtung 1 auf die jeweilige Fahrsituation entsprechend flexibel reagieren, da die Größe der Ausrückkraft F auch in Abhängigkeit der Änderungsgeschwindigkeit des Drehmomentes M bestimmt wird, insbesondere die Ausrückkraft F nämlich erhöht wird, wenn plötzlich und kurzfristig das Drehmoment M äußerst stark abfällt, da die zur Verfügung stehende Zeitspanne zum Ausrücken der Schiebemuffe äußerst gering ist. Anders ausgedrückt soll die auf die Schiebemuffe einwirkende Ausrückkraft F entsprechend kurzfristig erhöht werden, so wird über das Hydraulikventil 4a der Druck P2 im Raum 2a entsprechend erhöht, um so das Ausrücken der Schiebemuffe zu beschleunigen. Gleichzeitig kann auch der Druck P1 im Raum 2b verringert werden. Dieses hydraulische in Fig. 1 dargestellte System, nämlich die Vorrichtung 1 kann mit Hilfe des entsprechenden nicht dargestellten Steuergerätes und der hier eingehenden Messwerte realisiert werden.

Weiterhin ist es möglich, beispielsweise in Vorbereitung auf das Lösen einer Gangstufe eine geringe Vorsteuerkraft auf das Kupplungsglied, nämlich die Schiebemuffe aufzugeben. Hierdurch werden die "Spiele" und "Lose", die im Schaltapparat des Getriebes im Bereich der Schiebemuffe vorhanden sind abgebaut bzw. eleminiert. Im Augenblick einer Drehmomentenrücknahme kann dann auch die erforderliche Ausrückkraft F aufgebracht werden, mit der das Kupplungsglied, nämlich die Schiebemuffe sicher aus der Kupplungsverzahnung ausgerückt wird.

Die Ausrückkraft F kann auch in Abhängigkeit der Änderungsgeschwindigkeit des an der jeweiligen anliegenden Gangstufe anliegenden Drehmomentes M entsprechend realisiert werden, was von besonderer Bedeutung ist, weil dies einen Einfluss auf die Zeitdauer hat, während der das zu übertragende Drehmoment M hinreichend gering ist. Dies wird insbesondere bei der Erläuterung der Fig. 2 deutlich:

Die Fig. 2a, b, c zeigen auf der X-Achse die Zeit t, wobei Fig. 2a auf der Y-Achse die Größe des Drehmomentes M, Fig. 2b die Größe der Ausrückkraft F und Fig. 2c den zurückgelegten Weg W der Schiebemuffe darstellt.

So zeigt Fig. 2a ein relativ konstant anliegendes Drehmoment M über einen längeren Zeitraum, das aber über die Zeit t abnimmt. Fig. 2b macht deutlich, daß eine Vorsteuerkraft während des Anliegens des in Fig. 2a dargestellten Momentes M auf die Betätigungsstange 7 des Kolbens 8 gegeben wird, der das Kupplungsglied, nämlich die Schiebemuffe entsprechend betätigt. Hierdurch wird erreicht, das die "Lose", nämlich das "Spiel" im Schaltapparat, also im Schaltbereich der Schiebemuffe entsprechend reduziert wird, so daß sichergestellt ist, daß nach der in Fig. 2b ersichtlichen Druckanhebung bzw. Kraftanhebung auf das Niveau, das zum Herausziehen der Schiebemuffe notwendig ist, keine Totzeit zwischen Druckbeaufschlagung und Kraftanstieg entsteht. Generell gilt, das mit Hilfe der Kolben-Zylinder-Einheit 2, dargestellt in Fig. 1 sowohl das Ausrücken als auch das Einrücken der Schiebemuffe, also das Herausnehmen und das Einlegen eines Gangs erfolgen kann.

So zeigt die Fig. 2 durch den gestrichelt eingegrenzten Bereich, also durch die gestrichelt vertikal verlaufenden Linien, den Bereich, der für das Einlegen und Herausnehmen des Ganges entscheidend ist. Erreicht das in Fig. 2a dargestellte Drehmoment M diesen Bereich, fällt also das ursprüngliche Drehmoment M auf einen geringeren Wert ab, so beginnt sich die Schiebemuffe zu bewegen und auszurücken. Dies kann dadurch erfolgen, wie Fig. 2b zeigt, daß die entsprechende Ausrückkraft F anliegt bzw. der entsprechende Druck P1 in der Kammer 2a in der Kolben-Zylinder-Einheit 2 aufgebaut worden ist. Der Weg W der Schiebemuffe ist in Abbildung 2c dargestellt, wobei hier durch die horizontal verlaufende gestrichelte Linie die "Grenze" zwischen Gang eingelegt" und "Gang herausgenommen", also die entsprechenden Zustände dargestellt sind. Während des Ausrückens der Schiebemuffe bleibt die Ausrückkraft F im wesentlichen konstant, wie Fig. 2b zeigt. Es ist nun denkbar, daß während des Abfalls des Drehmomentes M an der jeweiligen Gangstufe aufgrund der Fahrsituation ein stärkerer Abfall des Drehmomentes M eintritt, insbesondere wenn der Fahrer den Fuß vom Gaspedal nimmt. Aus Fig. 2a wird ersichtlich, daß für diesen Fall sich die Zeitdauer bzw. Zeitspanne, in der die Schiebemuffe ausgerückt werden müßte, geringer werden würde, da sich der hier durch die beiden vertikal verlaufenden gestrichelten Linien begrenzte Bereich noch weiter verengen würde. In diesem Fall könnte durch eine weitere Erhöhung der Ausrückkraft F, was hier aber nicht dargestellt ist, das sichere Ausrücken der Schiebemuffe gewährleistet werden. Dies kann zum Beispiel eintreten, wenn beispielsweise bei einer Vollastfahrt (hohes Drehmoment) eine Schaltung und/oder ein Gangwechsel eingeleitet wird und gleichzeitig vom Fahrer das Drehmoment zurückgenommen wird, er also den Fuß vom Gaspedal nimmt, so daß sich diese oben beschriebene Zeitspanne verkürzt. An der Schiebemuffe liegt so eine ausreichend große Ausrückkraft F, so daß die hier realisierte Selbsthemmung zwischen Schiebemuffe und Losrad sicher überbrückt werden kann. Um dann den Gang bzw. die Gangstufe sicher lösen zu können, kann die Ausrückkraft F zum Herausziehen bzw. zum Ausrücken der Schiebemuffe, also entsprechend höher eingestellt werden. In diesem Fall würde das in Fig. 1 dargestellte hydraulische System den Druck P1 in dem Druckraum 2a entsprechend vergrößern bzw. den Druck P2 in dem Druckraum 2b verringern.

Im Ergebnis werden das erfindungsgemäße Verfahren bzw. die erfindungsgemäße Vorrichtung für den Gangwechsel in automatischen Schaltgetrieben entscheidene Vorteile erreicht.

### BEZUGSZEICHENLISTE

- 1: Vorrichtung
- 1a: hydraulisches Steuersystem
- 2: Kolben-Zylinder-Einheit
- 2a,2b: Raum
- 3: Hydraulikleitungen
- 4a,4b: Hydraulikventil
- 5: Hydraulikpumpen
- 6: Hydraulikspeicher
- 7: Betätigungsstange
- 8: Kolben
- 8a, 8b: Kolbenflächen

- P1, P2: Drücke
- F: Ausrückkraft
- W: Weg der Schiebemuffe

## Patentansprüche

1. Verfahren zur Steuerung des Ausrückens eines in einem Kraftfahrzeuggetriebe vorgesehenen Kupplungsgliedes, insbesondere einer Schiebemuffe bei der automatischen Schaltung/bei dem automatischen Gangwechsel eines automatischen Schaltgetriebes, wobei das Ausrücken des Kupplungsgliedes zum Lösen einer Gangstufe im Getriebe mit Hilfe eines Steuergerätes gesteuert wird, **dadurch gekennzeichnet, daß** die Größe der Ausrückkraft (F) variabel einstellbar ist und die Größe der Ausrückkraft (F) in Abhängigkeit des an der zu lösenden Gangstufe übertragenen Drehmomentes (M) und/oder der Änderungsgeschwindigkeit dieses Drehmomentes (M) bestimmt wird.

2. Verfahren nach Anspruch 1, **dadurch gekennzeichnet, daß** das Drehmoment (M) durch die Fahrpedalstellung des Gaspedals ermittelt wird.

3. Verfahren nach Anspruch 1 oder 2, **dadurch gekennzeichnet, daß** die Änderungsgeschwindigkeit des Drehmomentes (M) durch die entsprechende Änderung der Fahrpedalstellung des Gaspedals (Fahrpedalgradient) ermittelt wird.

4. Verfahren nach einem der vorstehenden Ansprüche, **dadurch gekennzeichnet, daß** das Verfahren mit hydraulischen Mitteln realisiert wird.

5. Verfahren nach einem der vorstehenden Ansprüche, **dadurch gekennzeichnet, daß** das Verfahren mit pneumatischen Mitteln realisiert wird.

6. Verfahren nach einem der vorstehenden Ansprüche, **dadurch gekennzeichnet, daß** das Verfahren mit mechanischen Mitteln realisiert wird.

7. Verfahren nach einem der vorstehenden Ansprüche, **dadurch gekennzeichnet, daß** jeder Gangstufe ein spezifisches Mindest-Drehmoment und eine entsprechende Mindest-Ausrückkraft zugeordnet ist und bei Erreichen und/oder Unterschreiten dieses Mindest-Drehmomentes das Kupplungsglied ausgerückt wird.

8. Verfahren nach einem der vorstehenden Ansprüche, **dadurch gekennzeichnet, daß** bei einer während eines Schaltvorganges auftretenden Änderung des Drehmomentes (M) die Größe der am Kupplungsglied anliegenden Ausrückkraft (F) in Abhängigkeit der Änderungsgeschwindigkeit dieses Drehmomentes (M) bestimmt wird, insbesondere bei einem kurzfristigen Abfall des Drehmomentes (M) die am Kupplungsglied anliegende Ausrückkraft (F) erhöht wird.

9. Vorrichtung (1) zur Steuerung des Ausrückens eines in einem Kraftfahrzeuggetriebe vorgesehenen Kupplungsgliedes, insbesondere arbeitend nach dem Verfahren gemäß einem der Ansprüche 1 bis 8, wobei das Kupplungsglied als Schiebemuffe ausgebildet ist und die Schiebemuffe mit dem Losrad eines ein Losrad und ein Festrad aufweisenden Zahnradpaares einer Gangstufe des Getriebes in Eingriff bzw. außer Eingriff bringbar ist, wobei zumindest im teilweise eingerückten Zustand der Schiebemuffe eine wirksame Verbindung zwischen der Antriebswelle und der Abtriebswelle des Getriebes realisiert ist und das Ausrücken der Schiebemuffe zum Lösen der Gangstufe im Getriebe, insbesondere zur Realisierung eines Schaltvorganges bzw. Gangwechsels, mit Hilfe eines Steuergerätes steuerbar ist, **dadurch gekennzeichnet, daß** die Größe der an der Schiebemuffe wirksam angreifenden Ausrückkraft (F) variabel einstellbar ist und die Größe der Ausrückkraft (F) in Abhängigkeit des an der zu lösenden Gangstufe übertragenen Drehmomentes (M) und/oder der Änderungsgeschwindigkeit dieses Drehmomentes (M) bestimmt ist.

10. Vorrichtung nach Anspruch 9, **dadurch gekennzeichnet, daß** die Schiebemuffe und das Losrad entsprechende Eingriffs- bzw. Mitnahmeverzahnungen aufweisen und die bei Zugbetrieb aneinanderliegenden Zahnflanken der Verzahnung einen derartigen Hinterschnittwinkel aufweisen, daß während des Anliegens eines oberhalb eines Mindestwertes liegenden Drehmomentes (M) des Antriebsmotors durch die Verzahnungen die Schiebemuffe und das Losrad in Eingriff haltende Haltekräfte erzeugbar sind.

11. Vorrichtung nach Anspruch 10, **dadurch gekennzeichnet, daß** bei Unterschreitung eines der jeweiligen Gangstufe zugeordneten Mindestdrehmomentes die Verzahnungen außer Eingriff bringbar sind.

12. Vorrichtung nach einem der Ansprüche 9 bis 11, **dadurch gekennzeichnet, daß** eine Kolben-Zylinder-Einheit (2) vorgesehen ist.

13. Vorrichtung nach Anspruch 12, **dadurch gekennzeichnet, daß** die Kolben-Zylinder-Einheit (2) hydraulisch betätigbar ist.

14. Vorrichtung nach Anspruch 12, **dadurch gekennzeichnet, daß** die Kolben-Zylinder-Einheit (2) pneumatisch betätigbar ist.

15. Vorrichtung nach einem der Ansprüche 9 bis 13, **dadurch gekennzeichnet, daß** ein hydraulisches Steuersystem mit Hydraulikleitungen (3), mindestens einem Hydraulikventil (4), einer Hydraulikpumpe und einem Hydraulikspeicher (6) vorgesehen ist.

16. Vorrichtung nach einem der vorstehenden Ansprüche, **dadurch gekennzeichnet, daß** die Betätigungsstange (7) des Kolbens (8) der Kolben-Zylinder-Einheit (2) direkt oder indirekt mit der Schiebemuffe wirksam verbunden ist.

17. Vorrichtung nach einem der vorstehenden Ansprüche, **dadurch gekennzeichnet, daß** die Betätigungssstange (7) des Kolbens (8) mit der Schaltwelle oder Schaltleiste des Getriebes wirksam verbunden ist.

18. Vorrichtung nach einem der vorstehenden Ansprüche, **dadurch gekennzeichnet, daß** das Steuergerät schaltungstechnisch mit den Hydraulikventilen (4a bzw. 4b) und der Hydraulikpumpe (5) verbunden ist.

19. Vorrichtung nach einem der vorstehenden Ansprüche, **dadurch gekennzeichnet, daß** zur Ermittlung der Fahrpedalstellung des Gaspedales ein erster Sensor vorgesehen ist.

20. Vorrichtung nach einem der vorstehenden Ansprüche, **dadurch gekennzeichnet, daß** zur Ermittlung der Änderungsgeschwindigkeit der Fahrpedalstellung des Gaspedals ein zweiter Sensor vorgesehen ist.

21. Vorrichtung nach einem der vorstehenden Ansprüche, **dadurch gekennzeichnet, daß** der erste und/oder der zweite Sensor schaltungstechnisch mit den Steuergerät verbunden ist.

22. Vorrichtung nach einem der vorstehenden Ansprüche, **dadurch gekennzeichnet, daß** der erste und/oder der zweite Sensor als induktiver Geber oder als Drehwinkelmesser ausgebildet sind.

23. Vorrichtung nach einem der vorstehenden Ansprüche, **dadurch gekennzeichnet, daß** die Ausrückkraft (F) über ein mechanisches Federsystem mit lastabhängiger, einstellbarer Federkraft realisierbar ist.

24. Vorrichtung nach einem der vorstehenden Ansprüche, **dadurch gekennzeichnet, daß** das Federsystem mindestens eine Feder aufweist und die Feder mit Hilfe eines Elektromotors auf die gewünschte Ausrückkraft (F) vorspannbar ist.

## Claims

1. Method for controlling the disengagement of a clutch member provided in a motor vehicle transmission, in particular of a sliding sleeve, during the automatic shift/automatic gear change of an automatic shift transmission, for disengagement of a clutch member with the release of a gear step in the transmission being controlled with the aid of a control apparatus, **characterized in that** the magnitude of the disengaging force (F) can be set variably, and the magnitude of the disengaging force (F) is determined as a function of the torque (M) transmitted at the gearstep to be released and/or of the rate of change of this torque (M).

2. The method according to Claim 1, **characterized in that** the torque (M) is determined by means of the accelerator-pedal position of the accelerator pedal.

3. Method according to Claim 1 or 2, **characterized in that** the rate of change of the torque (M) is determined by means of the corresponding change in the accelerator-pedal position of the accelerator pedal (accelerator-pedal gradient).

4. Method according to one of the preceding claims, **characterized in that** the method is implemented by hydraulic means.

5. Method according to one of the preceding claims, **characterized in that** the method is implemented by a pneumatic means.

6. Method according to one of the preceding claims, **characterized in that** the method is implemented by mechanical means.

7. Method according to one of the preceding claims, **characterized in that** each gear step is assigned a specific minimum torque and a corresponding minimum disengaging force and the clutch member is disengaged when this minimum torque is reached and/or undershot.

8. Method according to one of the preceding claims, **characterized in that**, in the case of a change in the torque (M) occurring during a shift operation, the magnitude of the disengaging force (F) applied to the clutch member is determined as a function of the rate of change of this torque (M), in particular, in the case of a brief fall in the torque (M), the disengaging force (F) applied to the clutch member is increased.

9. Device (1) for controlling the disengagement of a clutch member provided in a motor vehicle transmission, in particular operating by the method according to one of Claims 1 to 8, the clutch member being designed as a sliding sleeve, and the sliding sleeve being capable of being meshed with or demeshed from the loose wheel of a pair of gearwheels, having a loose wheel and a fixed wheel, of a gearstep of the transmission, an effective connection between the driveshaft and the output shaft in the transmission being implemented at least in the partially engaged state of the sliding sleeve, and the disengagement of the sliding sleeve for the release of the gearstep in the transmission, in particular for implementing a shift operation or gear change, being controllable with the aid of a control apparatus, **characterized in that** the magnitude of the disengaging force (F) effectively applied to the sliding sleeve can be set variably, and the magnitude of the disengaging force (F) is determined as a function of the torque (M) transmitted at the gearstep to be released and/or of the rate of change of this torque (M).

10. Device according to Claim 9, **characterized in that** the sliding sleeve and the loose wheel have corresponding meshing or take-up toothings, and the tooth flanks of the toothing which bear against one another in a traction mode have an undercut angle such that, when an engine torque (M) lying above a minimum value prevails, holding forces keeping the sliding sleeve and the loose wheel intermeshed can be generated by means of the toothings.

11. Device according to Claim 10, **characterized in that**, when the minimum torque assigned to the respective gearstep is undershot, the toothings can be demeshed.

12. Device according to one of Claims 9 to 11, **characterized in that** a piston/cylinder unit (2) is provided.

13. Device according to Claim 12, **characterized in that** the piston/cylinder unit (2) can be actuated hydraulically.

14. Device according to Claim 12, **characterized in that** the piston/cylinder unit (2) can be actuated pneumatically.

15. Device according to one of Claims 9 to 13, **characterized in that** a hydraulic control system with hydraulic lines (3), with at least one hydraulic valve (4), with a hydraulic pump and a hydraulic accumulator (6) is provided.

16. Device according to one of the preceding claims, **characterized in that** the actuating rod (7) of the piston (8) of the piston/cylinder unit (2) is operatively connected directly or indirectly to the sliding sleeve.

17. Device according to one of the preceding claims, **characterized in that** the actuating rod (7) of the piston (8) is operatively connected to the shifting shaft or shifting strip of the transmission.

18. Device according to one of the preceding claims, **characterized in that** the control apparatus is connected by circuitry to the hydraulic valves (4a and 4b) and to the hydraulic pump (5).

19. Device according to one of the preceding claims, **characterized in that** a first sensor is provided for determining the accelerator-pedal position of the accelerator pedal.

20. Device according to one of the preceding claims, **characterized in that** a second sensor is provided for determining the rate of change of the accelerator-pedal position of the accelerator pedal.

21. Device according to one of the preceding claims, **characterized in that** the first and/or the second sensor are/is connected by circuitry to the control apparatus.

22. Device according to one of the preceding claims, **characterized in that** the first and/or the second sensor are/is designed as an inductive transmitter or as an angle-of-rotation meter.

23. Device according to one of the preceding claims, **characterized in that** the disengaging force (F) can be implemented via a mechanical spring system with a load-dependent adjustable spring force.

24. Device according to one of the preceding claims, **characterized in that** the spring system has at least one spring, and the spring can be prestressed to the desired disengaging force (F) with the aid of an electric motor.

## Revendications

1. Procédé destiné à commander le débrayage d'un élément d'embrayage prévu dans une boîte de vitesses d'un véhicule automobile, notamment d'un manchon baladeur lors de l'embrayage automatique / du changement de vitesse automatique d'une boîte de vitesses automatique, le débrayage de l'élément d'embrayage en vue de désengager le rapport en prise dans la boîte de vitesses étant commandé à l'aide d'un appareil de commande, **caractérisé en ce que** la magnitude de la force de débrayage (F) est variable et ajustable et que la magnitude de la force de débrayage (F) est déterminée en fonction du couple (M) transmis au rapport qu'il y a lieu de désengager et/ou de la vitesse de changement de ce couple (M).

2. Procédé selon la revendication 1, **caractérisé en ce que** le couple (M) est déterminé à partir de la position de la pédale d'accélérateur.

3. Procédé selon la revendication 1 ou 2, **caractérisé en ce que** la vitesse de changement du couple (M) est déterminée par le changement correspondant de la position de la pédale d'accélérateur (gradient de la pédale d'accélérateur).

4. Procédé selon l'une quelconque des revendications précédentes, **caractérisé en ce que** le procédé est mis en oeuvre avec des moyens hydrauliques.

5. Procédé selon l'une quelconque des revendications précédentes, **caractérisé en ce que** le procédé est mis en oeuvre avec des moyens pneumatiques.

6. Procédé selon l'une quelconque des revendications précédentes, **caractérisé en ce que** le procédé est mis en oeuvre avec des moyens mécaniques.

7. Procédé selon l'une quelconque des revendications précédentes, **caractérisé en ce qu'**un couple spécifique minimum et une force de débrayage minimum correspondante sont associés à chaque rapport et que l'élément d'embrayage est débrayé lorsque le couple est inférieur et/ou égal à ce couple minimum.

8. Procédé selon l'une quelconque des revendications précédentes, **caractérisé en ce que,** lorsqu'un changement du couple (M) a lieu lors d'un changement de vitesse, la magnitude de la force de débrayage (F) appliquée à l'élément d'embrayage est déterminée en fonction de la vitesse de changement de ce couple (M), notamment qu'en cas de couple (M) temporairement moins élevé, la force de débrayage (F) appliquée à l'élément de débrayage est augmentée.

9. Dispositif (1) destiné à commander le débrayage d'un élément d'embrayage prévu dans une boîte de vitesses d'un véhicule automobile et qui fonctionne notamment selon le procédé caractérisé aux revendications 1 à 8, l'élément d'embrayage étant conformé en forme de manchon baladeur et le manchon baladeur pouvant venir en prise avec le pignon fou d'une paire de roues dentées comportant un pignon fou et un pignon fixe d'un rapport de la boîte de vitesses ou s'en désengager, un accouplement efficace étant réalisé entre l'arbre menant et l'arbre mené de la boîte de vitesses lorsque le manchon baladeur est au moins en partie embrayé et le débrayage du manchon baladeur pouvant être commandé à l'aide d'un appareil de commande pour désengager le rapport en prise dans la boîte de vitesses, notamment pour effectuer un embrayage, voire un changement de vitesse, **caractérisé en ce que** la magnitude de la force de débrayage (F) agissant efficacement sur le manchon baladeur est ajustable et variable et que la magnitude de la force de débrayage (F) est déterminée en fonction du couple (M) transmis au rapport qu'il y a lieu de désengager et/ou de la vitesse de changement de ce couple (M).

10. Dispositif selon la revendication 9, **caractérisé en ce que** le manchon baladeur et le pignon fou comportent des dentures d'engrènement, voire des dentures d'entraînement, appropriées et que les flancs des dents des dentures, qui sont adjacents **en** traction, présentent un angle de contre-dépouille tel que lorsqu'un couple (M) du moteur d'entraînement, qui est supérieur à une valeur minimale, est appliqué, des forces de retenue maintenant le manchon baladeur et le pignon fou en prise peuvent être générées par les dentures.

11. Dispositif selon la revendication 10, **caractérisé en ce que** les dentures peuvent être désengagées lorsque le couple est inférieur à un couple minimum associé au rapport en prise respectif.

12. Dispositif selon l'une quelconque des revendications 9 à 11, **caractérisé en ce qu'**un ensemble cylindre-piston (2) est prévu.

13. Dispositif selon la revendication 12, **caractérisé en ce que** l'ensemble cylindre-piston (2) peut être actionné hydrauliquement.

14. Dispositif selon la revendication 12, **caractérisé en ce que** l'ensemble cylindre-piston (2) peut être actionné pneumatiquement.

15. Dispositif selon l'une quelconque des revendications 9 à 13, **caractérisé en ce qu'**un système de commande hydraulique avec des lignes hydrauliques (3), au moins une soupape hydraulique (4), une pompe hydraulique et un réservoir hydraulique (6) est prévu.

16. Dispositif selon l'une quelconque des revendications précédentes, **caractérisé en ce que** la tige d'actionnement (7) du piston (8) de l'ensemble cylindre-piston (2) est activement reliée, directement ou indirectement, au manchon baladeur.

17. Dispositif selon l'une quelconque des revendications précédentes, **caractérisé en ce que** la tige d'actionnement (7) du piston (8) est activement reliée à l'arbre ou à la réglette de changement de rapport de la boîte de vitesses.

18. Dispositif selon l'une quelconque des revendications précédentes, **caractérisé en ce que** l'appareil de commande est relié, pour le changement de rapport, aux soupapes hydrauliques (4a, voire 4b) et à la pompe hydraulique (5).

19. Dispositif selon l'une quelconque des revendications précédentes, **caractérisé en ce qu'**un premier capteur est prévu pour déterminer la position de la pédale d'accélérateur.

20. Dispositif selon l'une quelconque des revendications précédentes, **caractérisé en ce qu'**un deuxième capteur est prévu pour déterminer la vitesse de changement de la position de la pédale d'accélérateur.

21. Dispositif selon l'une quelconque des revendications précédentes, **caractérisé en ce que,** pour le changement de rapport, le premier et/ou le deuxième capteur est relié à l'appareil de commande.

22. Dispositif selon l'une quelconque des revendications précédentes, **caractérisé en ce que** le premier et/ou le deuxième capteur est conformé en forme de transducteur inductif ou de dispositif de mesure de l'angle de rotation.

23. Dispositif selon l'une quelconque des revendications précédentes, **caractérisé en ce que** la force de débrayage (F) peut être obtenue par un système de ressorts mécanique, la force des ressorts pouvant être ajustée en fonction de la charge.

24. Dispositif selon l'une quelconque des revendications précédentes, **caractérisé en ce que** le système de ressorts comporte au moins un ressort et que le ressort peut être bandé à l'aide d'un moteur électrique afin d'obtenir la force de débrayage (F) souhaitée.
